# EUROPÄISCHE PATENTSCHRIFT

(11) **EP 0 509 422 B1**
(45) Veröffentlichungstag und Bekanntmachung des Hinweises auf die Patenterteilung: **29.11.1995**
(21) Anmeldenummer: 92106323.6
(22) Anmeldetag: 12.04.1992
(51) Int. Cl.: E03F 5/10, E02B 7/20, G05D 9/02

(54) **Einrichtung zur Steuerung von Überfallmengen und Wasserspiegellagen in Wasseranlagen**
Apparatus for controlling the overflow and water level of hydraulic installations
Dispositif de commande de déversement et de niveau d'eau d'installations hydrauliques

(30) Priorität: 13.04.1991 DE 4112151
(43) Veröffentlichungstag der Anmeldung: 21.10.1992
(73) Patentinhaber: APA ABWASSERTECHNIK GmbH, D-74629 Pfedelbach (DE)
(72) Erfinder: Göhre, Karl-Heinz, D-7114 Pfedelbach-Windischenbach (DE)
(74) Vertreter: Utermann, Gerd, Dipl.-Ing.

(56) Entgegenhaltungen:
- DE-A- 2 911 780
- DE-A- 3 022 998
- FR-A- 2 033 187
- GB-A- 1 543 374

## Beschreibung

Die Erfindung betrifft eine Einrichtung zur Steuerung von Überfallmengen und Wasserspiegellagen in Wasseranlagen, insbesondere in Regenwasserrückhalte- und Regenwasserbehandlungsanlagen sowie Regenbecken, die bei Mischwasser-Kanalisation zum Einsatz kommen und aus Gründen des Gewässerschutzes den Spülstoß bei Regenbeginn aufnehmen und in bestimmten Volumen speichern sowie in Kläranlagen. Darin wird ein Regenüberlauf-Stauschild in einer Steuereinrichtung benutzt.

In der Technik der Einstellung eines Stauzieles, also der Höhenlage eines Wasserspiegels, gibt es viele Vorschläge für die Abstützung, Betätigung und Steuerung von Stauklappen oder Stauschilden. Dabei gibt es grundsätzlich mehrere Arten. Zum einen kann eine Stauklappe im Bereich der Überlaufschwelle in der Nähe der Kante ihres oberen oder unteren Endes unmittelbar oder über Hebel abgestützt sein. Wenn sie im Bereich ihres unteren Endes und zudem in der Nähe der ortsfesten Überlaufschwelle abgestützt ist, so wird sie mit ihrem oberen Ende nach unten geklappt und das Überfallwasser fließt über die Stauklappe. Durch Einstellung ihrer Neigung und damit ihrer Oberkante kann dann der maximale Wasserspiegel eingestellt werden. Dabei fließt jedoch der Wasseranteil mit Schwebstoffen über die Stauklappe. Das ist vielfach unerwünscht. Deshalb gibt es Stauschilde oder Stauklappen, die im Bereich ihres oberen Endes angelenkt oder sonstwie abgestützt sind und von der Überlaufschwelle abheben, so daß sich ein Durchflußquerschnitt zwischen der Oberkante der ortsfesten Wehrschwelle und der Stauklappe ergibt.

Die Betätigung der Klappen oder Stauschilde erfolgt in der Regel über Hebelgestänge, die auf eine in der Drehachse liegende Welle oder das Stauschild bzw. auf die Stauklappe auf sonstige Weise einwirken. Die aus dem Wasserdruck resultierenden Kräfte und die Verstellbewegungen können dabei über Gewichte, Schwimmer oder Stellantriebe mit Hebeln und/oder Seilen erfolgen. Solche Wehre und Stauklappen sind aus den folgenden Druckschriften bekannt: DE-OS 30 22 998, DE-OS 30 22 997, DE-OS 29 11 780 und GB-A-1 543 374.

Die der Erfindung am nächsten kommende Anordnung ergibt sich aus der britischen Patentschrift 1 543 374, bei der in Fig. 24 eine Horizontalführung für ein gewichtsbelastetes Stauschild vorgesehen ist, wobei das Gegengewicht als Schwimmer im Oberwasser ausgebildet ist. Aus dieser Schrift sind die im folgenden aufgelisteten Merkmale a) bis e), g), h), K) und l) zu entnehmen. Eine solche Anordnung erfüllt keine idealen Bedingungen für einen evtl. Rückstaufall und ihr fehlen auch geeignete Ausgestaltungen für einen sinnvollen Einsatz bei Regenbecken und Kläranlagen.

Der Erfindung liegt die Aufgabe zugrunde, die Ausgestaltung, Abstützung, Führung, Gewichtsbelastung eines Stauschildes an einer Überlaufschwelle zu optimieren und dabei die Wirkung des als Schwimmer ausgebildeten Gegengewichts auch im Rückstaufalle optimal zu nutzen.

Erfindungsgemäß ist eine Einrichtung der vorn umrissenen Art mit folgenden Merkmalen ausgestattet:
a) - mit einem Stauraum,
b) - mit Zulauf und Ablauf,
c) - mit einer Überlaufschwelle,
d) - mit einem Stauschild,
e) - das Stauschild ist zur Vergrößerung der Stauhöhe ausgebildet,
f) - das Stauschild ist bei Erreichen eines vorgegebenen Wasserstandes in dem an ein Wasserbecken angeschlossenen Stauraum entsprechend dem Wasserdruck in Öffnungsstellung bewegbar und schließt bei fallendem Wasserspiegel,
g) - dem Stauschild ist zur Bestimmung der Schließkraft ein Gegengewicht zugeordnet,
h) - die Öffnungsbewegung erfolgt in Richtung der Fließrichtung des überlaufenden Wassers;
i) - das Stauschild ist dadurch als Rückstausicherung ausgebildet;
k) - das Stauschild nimmt in der Schließstellung und in der ganz geöffneten Stellung eine im wesentlichen vertikale Stellung ein;
l) - das Gegengewicht ist über einen Seilzug zur Aufbringung der Schließkraft mit dem Stauschild verbunden,
m) - dem Stauschild sind Seitenführungen bzw. Seitenwangen zugeordnet,
n) - das als Schwimmer ausgebildete Gegengewicht wird vom im Überlaufraum aufgestauten Wasser angehoben bzw. mit fallenden Spiegel desselben abgesenkt;
o) - das Gegengewicht hat im Querschnitt eine Profilform, bei der die hydraulischen Auftriebskräfte in Schwimmerstellung, die Höhe und Masse des Gegengewichts und die Größe seines Volumens entsprechend dem gewünschten Öffnungsverhalten an die Größe des Stauschildes angepaßt sind.

Dadurch daß das als Schwimmer ausgebildete Gegengewicht im Überlaufraum hängt und außerdem gemäß den hydraulischen Bedingungen, d.h. gemäß der Größe der von der Stauhöhe abhängigen Kräfte gestaltet ist, also durch seine Form und die sonstigen Anpaßmöglichkeiten, beispielsweise als füllbarer Hohlraum an wechselnde Bedingungen bei gleicher Grundgestaltung anpaßbar gestaltet ist, kann man die Betriebsbedingungen besser optimieren, mit einfachen sicher arbeitenden Mitteln die genaue Einhaltung des Stauzieles erreichen und im Rückstaufall die Kräfte so wirken lassen, daß der Rückstauverschluß optimal wirksam wird.

Das Stauschild ist also zwischen der vertikalen Schließlage und einer vertikalen Maximal-Öffnungslage gegen die Schließkraft eines auf die vom Wasserdruck beaufschlagte Fläche des Stauschildes abgestimmten Schwimmer-Gegenwichtes verschiebbar. So ergeben sich bei wesentlich verbesserten Nutzungsmöglichkeiten für die vorhandenen Speichervolumina, Strömungsverhältnisse am Überlauf zwischen der Überlaufschwelle und dem Stauschild und besonders günstige Stütz- und Führungsverhältnisse für das Stauschild. Dieses braucht nicht unbedingt in allen Stellungen senkrecht zu stehen und braucht nicht auf seinem ganzen Weg geradlinig geführt zu werden, sondern kann mit Hilfe geeigneter Stützmittel für das Stauschild ausstattet werden, um dieses ggf.auch auf anderen Raumwegen zu führen. Die Stütz- und Führungsmittel werden auch als Wehrwangen bezeichnet. Dadurch daß die untere Schließkante des Stauschildes von der Überlaufschwelle abhebt und das Überfallwasser unter ihr durchfließt und das Stauschild die Schwebstoffe zurückhält, werden die Zuflußwege des Vorfluters und die Bachränder nicht verunreinigt.

In vorteilhafter Ausgestaltung dieses Erfindungsprinzips kann vorgesehen sein, daß das Gegengewichts-Element als Hohlkörper ausgebildet ist, der zur Bestimmung der Schließkraft und damit des Stauzieles, also des über der Überlaufkante der Überlaufschwelle liegenden Stau-Wasserspiegels mit Ballast-Stoffen, z.B. Wasser oder anderen Stoffen, wie Sand oder Steinen füllbar ist. Dadurch kann mit einfachsten Mitteln bei gleicher, rationell zu fertigender Grundausführung schnelle und preiswerte Anpassung an die Bedürfnisse der jeweiligen Wasseranlage erzielt werden.

Durch eine erfindungsgemäße Fortbildung der Ausgestaltung einer Abstützung und Führung des Stauschildes wird erreicht, daß das Überlaufwasser zwischen der Überlaufschwelle und der Unterkante des Stauschildes im Abstand unter dem Regenwasserspiegel in den zum Vorfluter geöffneten Überflußraum gelangt. So hält das Stauschild die Schwebstoffe zurück und die Zuflußwege des Vorfluters und die Bachränder werden nicht verunreinigt. Dafür und für langzeitig wartungsarmen Betrieb ist das Stauschild zweckmäßigerweise mit Horizontalführungen ausgestattet. Dichtungen sind ortsfest möglich, in besonders günstiger Weise für Herstellung und Wartung in weiterer Ausgestaltung der Erfindung jedoch am Rand des Stauschildes auf der der Überlaufschwelle zugewandten Seite desselben angebracht.

Die Erfindung wird nachfolgend anhand der Zeichnungen an einem Ausführungsbeispiel mit einer Variante erläutert.

Es zeigen:
- Fig.1: Eine überwiegend schematisierte Schrägdarstellung wesentlicher Teile des Beckenbauwerkes der erfindungsgemäßen Einrichtung im Bereich von Überlaufschwelle und Überlaufraum, wobei die Beckenwände vor dem Abfluß des Überlaufraumes geschnitten sind und das Stauschild mit Führung, Seil und Umlenkrollen einer Seite und ein geschnittener Teil des Gegengewichts in Schließstellung des Stauschildes dargestellt sind;
- Fig.2: eine der Fig. 1 entsprechende Darstellung in der Offenstellung des Stauschildes;
- Fig.3: einen schematisierten Vertikal-Querschnitt durch die Mitte einer ursprünglich als "Regenüberlauf" bezeichneten Einrichtung zur Steuerung von Überfallmengen und Wasserspiegellagen in Wasseranlagen, z.B.in Regenwasserrückhalteanlagen, Regenbecken und Kläranlagen in einem ersten, als "Trockenwetterstellung" bezeichneten ungefüllten Zustand mit Stauschild in Schließstellung;
- Fig.4: eine der Fig. 3 entsprechende Darstellung in einem ursprünglich als "Regenwetterstellung bis Erreichen des maximalen Stauzieles" bezeichneten, teilgefüllten Zustand mit Stauschild in Schließstellung;
- Fig.5: eine der Fig. 4 entsprechende Darstellung in einem ursprünglich als "Regenwetterstellung bei Erreichen des maximalen Stauzieles" bezeichneten, teilgefüllten Zustand mit Stauschild in Offenstellung mit überlaufendem Wasser;
- Fig.6: eine der Fig. 4 entsprechende Darstellung in einem ursprünglich als "Regenwetterstellung bei maximalem Stauziel und Rückstau vom Vorfluter" bezeichneten, gefüllten Zustand mit Stauschild in teilweise Offenstellung;
- Fig.7: eine der Fig. 6 entsprechende Darstellung in einem ursprünglich als "Trockenwetterstellung mit Rückstau vom Vorfluter" bezeichneten, teilgefüllten Zustand mit Stauschild in Schließstellung;
- Fig.8: einen schematisierten Horizontal-Querschnitt durch die Einrichtungen der vorstehend aufgeführten Figuren, ursprünglich als "Grundriß-Regenüberlauf-Trockenwetterstellung" bezeichnet, wobei der Zustand des Stauschildes ausgezogen in Schließstellung und gestrichelt in Offenstellung gezeichnet ist;

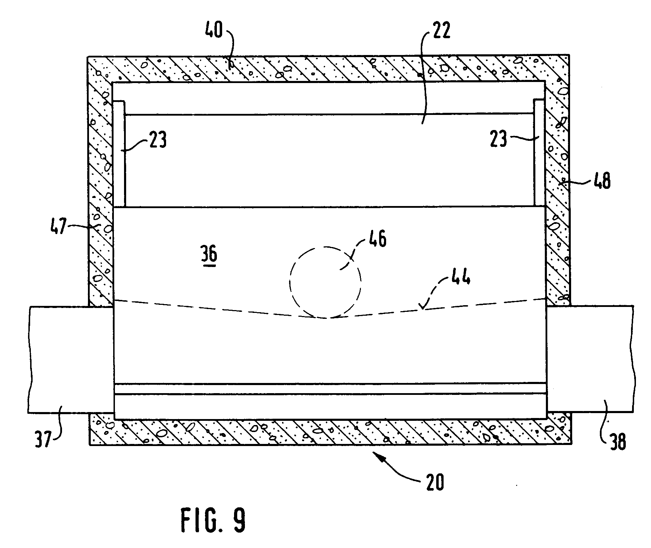

- Fig.9: einen schematisierten Vertikal-Querschnitt längs der Linie 9 - 9 in Fig 8 durch die Einrichtungen gemäß den vorstehend erläuterten Figuren, ursprünglich als "Regenüberlauf- Trockenwetterstellung" bezeichnet.

Die Einrichtung zur Steuerung von Überfallmengen und Wasserspiegellagen in Wasseranlagen, beispielsweise Regenwasser-Rückhalteanlagen oder Klärbecken, enthält ein in der Regel vor Ort aus Beton errichtetes, mehrere Räume, Raumbereiche oder Kammern sowie Zu- und Abflüße enthaltendes Beckenbauwerk 20. Dieses bildet einen im dargestellten Ausführungsbeispiel kubisch dargestellten Stauraum 35 und einen Überlaufraum 36. Der Stauraum 35 hat an seiner ausgerundeten Sohle 43 auf der einen Seite einen Zulauf 37 und auf der anderen Seite einen Ablauf 38. Zwischen dem Stauraum 35 und dem Überlaufraum 36 ist die auch als 'Überlaufschwelle' bezeichnete Schwelle 28 ausgebildet. Ihre Oberkante 39 liegt auf dem Niveau N1. Wie aus den Zeichnungen ersichtlich, sind die umliegenden Wände hier geradlinig lotrecht aufgeführt und von einer Deckplatte 40 abgedeckt. In dieser sind bei der praktischen Ausführung in der Regel Einstiegs- und Montageöffnungen vorgesehen. Das Niveau N1 liegt um den Betrag 41 unterhalb der Deckplatte 40 so daß sich eine Übertrittsöffnung 42 für das Überfallwasser ergibt.

Das in der Regel in Ortbeton ausgeführte Beckenbauwerk 20 kann auch jede beliebige andere Form haben, die sich aus den örtlichen Gegebenheiten und dem dadurch bedingten und/oder gewünschten Wasserfluß ergibt.

Die im geeigneten Profil ausgeführte Sohle 44 des Überlaufraumes 36 liegt in der Regel etwas höher als die Sohle 43 des Stauraums 35. Der Überlaufraum 36 hat einen Abfluß 46.

Diese Bauwerksteile und -bestandteile sind in der üblichen Art ausgeführt. Das Bauwerk ist so hoch ausgeführt, daß der Wasserspiegel des Rückhaltebeckens, dem die Einrichtung zugeordnet ist, bis auf das Niveau N2 ansteigen kann. Dieses Niveau N 2 ist auch als 'Stauziel' bezeichnet worden. Das Anheben des Wasserspiegels bewirkt im angeschlossenen Becken eine beträchtliche Vergrößerung des Aufnahmevolumens ohne Vergrößerung der Grundfläche. Damit die davon aufgenommenen Wassermengen problemlos und ohne Beeinträchtigung der Umgebung aufgenommen werden und gesteuert abgeleitet werden können, sind Einrichtungen mit Stauschilden oder Stauklappen üblich.

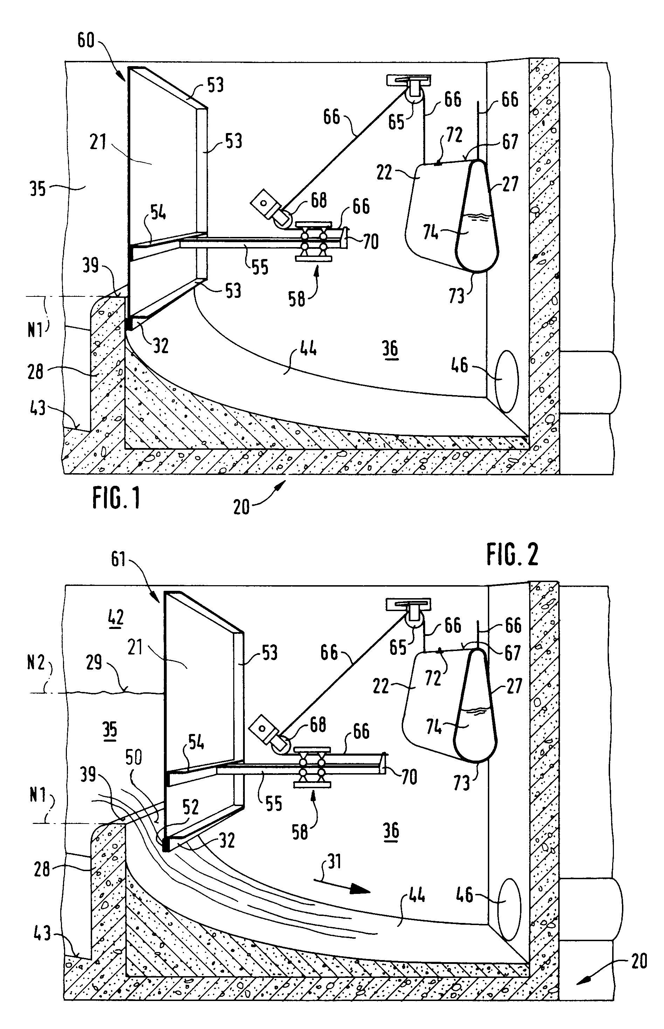

Im vorliegenden Falle ist ein vertikales Stauschild 21 vorgesehen. Seine Unterkante 32 liegt um den für die Abdichtung erforderlichen Betrag unter dem Niveau N2, zumindest in der in Fig. 1, 3, 4 und 7 dargestellten Schließstellung. Die Höhe des Stauschildes 21 kann gemäß den Abmessungen des Bauwerkes auf ein gewünschtes Maß festgelegt werden.

An den Seitenwänden 47 und 48 sind in der Übertrittsöffnung 42 Dichtleisten 49, beispielsweise in Form von rostfreien Winkeleisen angebracht oder in anderer Weise ausgebildet. Diese bilden mit der Wandfläche 51 der Schwelle 28 im Überlaufraum 36 eine Dichtebene 50, an der die elastische Dichtung 52 des Stauschildes 21 zum Abdichten gegenüber dem Stauraum 35 im Bereich der Schwelle 28 zur Anlage kommt.

Das Stauschild 21 ist von einer Blechplatte mit einem an seinen Außenkanten umlaufenden Verstärkungsrahmen 53 gebildet. Ein Stützbalken 54 erstreckt sich horizontal über die Rückseite des Stauschildes 21 und zwar in einer Höhenlage, die etwa der optimalen Betriebslage einer Stützkraft in Höhe des Schwerpunktes der Wasserdruckkräfte entspricht. An diesem Stützbalken 54 sind im Bereich der Seitenwände 47, 48 Führungsstäbe 55 befestigt. Diese erstrecken sich horizontal in geringem Abstand von und parallel zu den beiden Seitenwänden 47, 48 in den Überlaufraum 36 hinein. Sie ragen durch die ortsfesten, an den Seitenwänden 47, 48 angebrachten Rollenführungselemente 58. In diesen sind oberhalb und unterhalb der Führungsstäbe 55 und 56 jeweils ein oder zwei Präzisionsrollen angebracht. Diese Horizontalführung wird mit geeignet für die Benutzung in Schmutzwasser ausgelegten Laufrollenführungsbauteilen ausgeführt. Es sind Abstreifer vorgesehen, die Bauteile sind aus nicht rostenden Werkstoffen, insbesondere nicht rostenden Stählen, hergestellt, mit Kugel- oder Rollenlagern ausgestattet und mit entsprechenden Schmierungen und Reinigungsmitteln und entsprechenden Abdeckungen, wie sie am Markt für allgemeine Zwecke üblich sind, ausgestattet.

Sie sorgen für eine horizontale Beweglichkeit des Stauschildes 21 im Rahmen des vorgesehenen Öffnungsmaßes von der Schließstellung 60 an der Schwelle 28 bis zur Öffnungsstellung 61, die durch den gewünschten Verschiebe-Hub und die Anordnung der Bauteile begrenzt ist. Diese Führungsanordnung ist in den ursprünglichen Unterlagen als Seitenwange bezeichnet.

Eine wichtige Besonderheit der Erfindung liegt in einer mit Hilfe von Seilrollen und Seilen und einem Gegenwicht aufgebauten Anordnung, die im folgenden näher beschrieben wird.

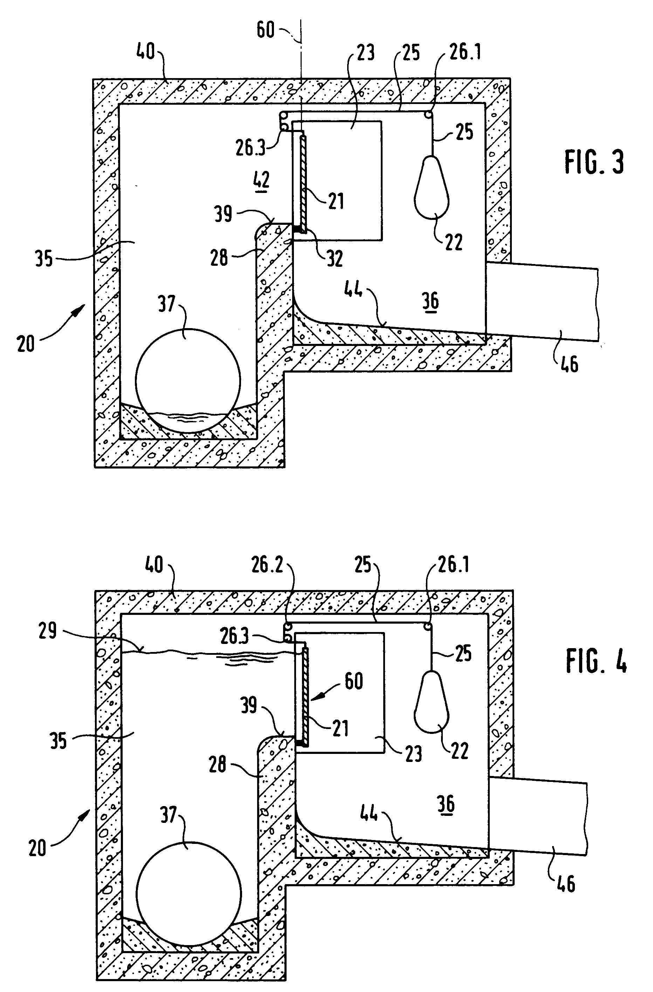

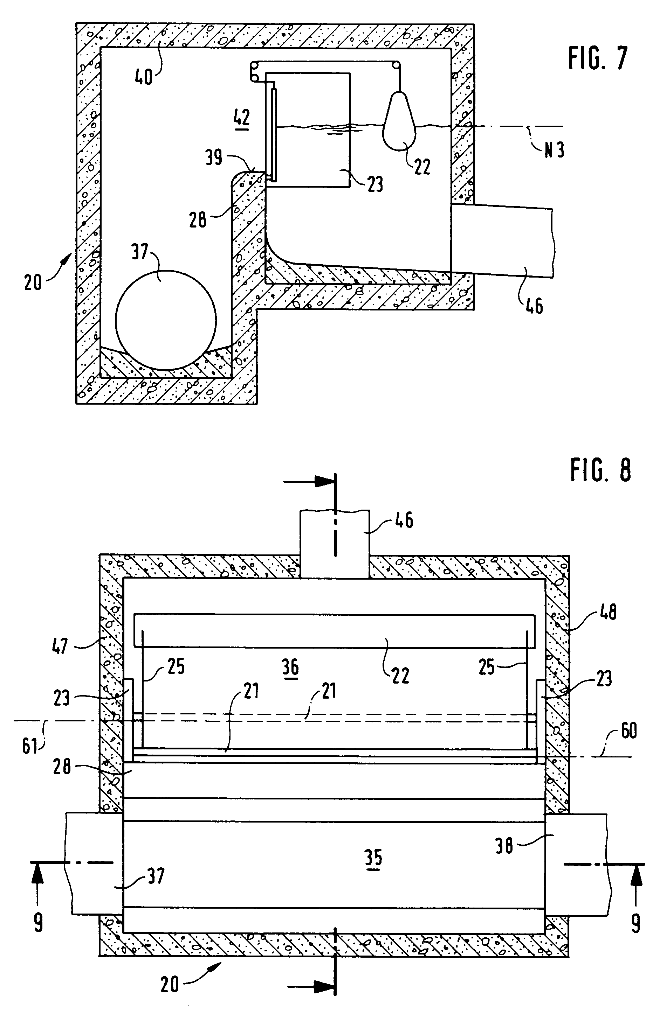

Bei der in den Fig. 1 u. 2 dargestellten Variante des erfindungsgemäßen Ausführungsbeispieles ist an jeder der beiden Seitenwände - nur in Fig. 8 u. 9 mit 47 bzw. 48 bezeichnet - jeweils eine obere Umlenkrolle 65 angebracht, über die das jeweils zugeordnete Seil 66 zur Oberkante 67 des Gegengewichtes 22 geführt ist. In den Fig. 3 bis 5 ist das frühere Bezugzeichen 26.1 für die obere Umlenkrolle benutzt. Die vorderen Umlenkrollen sind in den beiden Darstellungs- bzw. Ausführungsvarianten geringfügig unterschiedlich dargestellt. In der deutlicheren Darstellung der Ausführungsvariante in den Schrägbildern der Fig. 1 u 2 lenken unten angebrachte Umlenkrollen 68 die Seile 66 auf der Höhenlage ihrer Befestigung an Seilhaltern 70 so um, daß die Seile bei der Verschiebung der Führungsstäbe 55 in der Horizontalen verlaufen und günstige Kraftüberleitungsbedingungen liefern. Die Seilhalter 70 sind an den Enden der Führungstäbe 55 befestigt, wie es die Fig. 1 und 2 zeigen. In den Fig 3 bis 7 ist die ursprüngliche, noch mehr schematische Darstellung der Variante von Seilführungsweg und Seilbefestigung belassen. Dabei verläuft der als unmittelbar und der darstellerischen Übersichtlichkeit halber direkt an der Oberkante des Stauschildes 21 ziehend dargestellte Teil des Seiles 25 ebenfalls horizontal. Die beiden für diese Umlenkung vorgesehenen Rollen 26.1 und 26.2 liegen entsprechend hoch und entsprechen der Umlenkrolle 68 in Fig. 1 u. 2. Die Stauschildführungen sind dabei ebenfalls der Übersichtlichkeit halber nicht im einzelnen dargestellt. Das Stauschild und das Gegengewicht sind also über einen Seilzug mit Nutrollen miteinander verbunden und somit wird das Gegengewicht hergestellt.

Die Führungselemente und die Seile mit ihren Umlenkrollen sind zweckmäßigerweise mit geeigneten Blechschutzkappen abgedeckt. Diese sind der Übersichtlichkeit halber nicht dargestellt.

Das Gegengewicht 22 ist als länglicher Profil-Hohlkörper 27 ausgebildet, wie es die Fig. 1, 2 im einzelnen und die übrigen Figuren schematisch zeigen. Er ist ringsum verschlossen und ist beispielsweise aus rostfreiem Stahlblech gebogen und verschweißt. Der Hohlkörper hat verschließbare Einlaß- und Auslaß-Öffnungen 72, um seinen Innenraum nach Bedarf mit Wasser oder sonstigen Ballaststoffen, wie Sand oder Steinen zu füllen und evtl. ggf.teilweise zu entleeren. Dieses Gegengewicht 22 dient wegen der Ausbildung als Hohlkörper zugleich als Schwimmer und gestattet daher, durch seine Größe, sein Volumen, seine Masse einschließlich der Ballastfüllung 74 und seine Höhe die Verschiebeverhältnisse des Stauschildes 21 so zu bestimmen, wie es für den Wasserüberlauf sinnvoll ist. Dazu werden die üblichen Bemessungs- und Berechnungsregeln der Hydraulik und des Wasserbaus angewendet. Durch Abstimmung der Abmessungen und der Füllung 74 durch Befüllen bzw. Entleeren des Gegengewichts 22 kann zusammen mit den sonstigen Gegebenheiten der Einrichtung die Höhe des Niveaus N2, also des Stauzieles und damit die Wasserspiegellage im Regenbecken bestimmt und verändert werden. Die Gestaltung kann vorteilhafterweise so getroffen sein, daß die Höhe des Gegengewichts (22) der Überfallhöhe entspricht und durch die hydraulische Form des Gegengewichtes der Ausgleich der Öffnungsweite des Stauschildes bei Rückstau nachgeregelt wird.

Die Einrichtung arbeitet folgendermaßen:
Steigt z.B. bei starkem Regenwasser-Anfall die Wassermenge im zu überwachenden Becken an, so bleibt zunächst das Stauschild 21 geschlossen, verharrt also in der Schließstellung 60, d.h. seine Dichtung 52 liegt in der Dichtebene 50 an. Das als nach hydraulischen Gesichtspunkten ausgebidete und dimensionierte und ggf. als Schwimmer wirkende Gegengewicht 22 hängt ohne Wasserstützung frei in seiner untersten Position im Überlaufraum 36.

Steigt der Wasserspiegel weiter bis in die Nähe des Stauzieles - Niveau N 2 - an, so öffnet sich das Stauschild 21, indem es sich - in den Zeichnungen betrachtet nach rechts - bewegt und sich seine Führungsstäbe 55 in den Rollenführungselementen 58 verschieben, dadurch die Seilhalter 70 verschieben, diese an den Seilen 60 ziehen und dieselben über die Umlenkrollen 68 und 65 auf das Gegenwicht 22 derart wirken lassen, daß dieses ansteigt. Somit stellt sich ein durch die Abmessungen der verschiedenen Teile, die Größe der Übertrittsöffnung 42, die von Wasserdruck beaufschlagte Fläche des Stauschildes 21, die dynamischen, auf das Stauschild 21 wirkenden Kräfte des fließenden Wassers und die Dimensionierung des Gegengewichtes 22 bestimmtes Gleichgewicht zwischen den Wasserkräften und den auf das Gegengewicht 22 einwirkenden Schwerkräften ein, wie es vom Planer bestimmt werden kann. Dafür kann - wie aus den Fig. 1 und 2 ersichtlich - in das mit der profilgeformten Blechwand 73 gebildete Gegengewicht 22 mit Ballast-Wasser 74 in der erforderlichen Menge gefüllt werden.

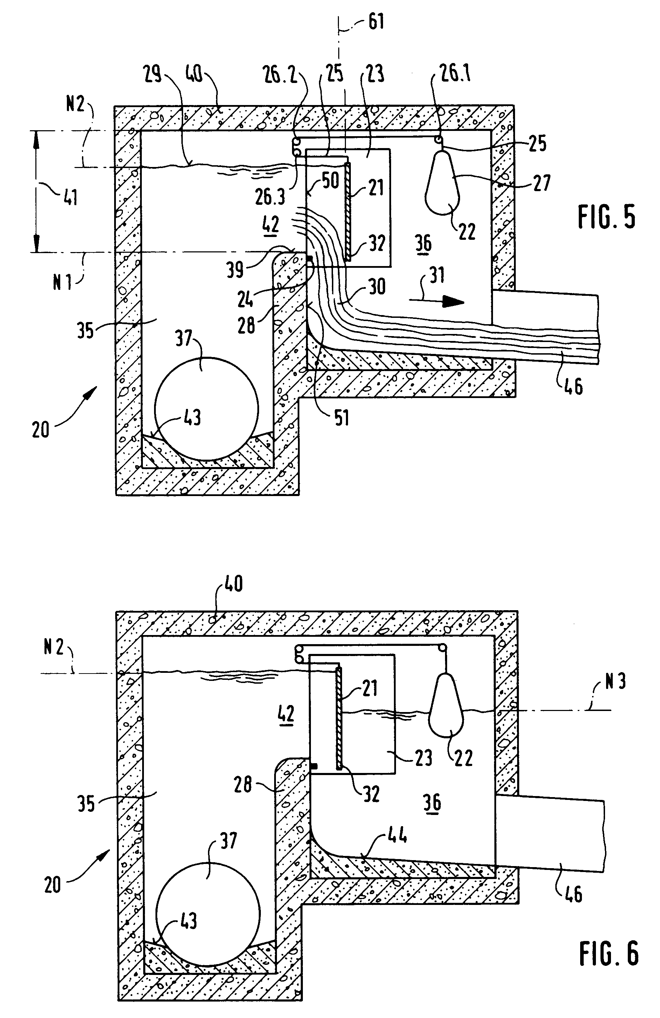

Das Überfall-Wasser 30 gelangt - wie in den Fig. 2 und 5 dargestellt - über die Schwelle 28 und fließt durch den Überlaufraum 36 und den Abfluß 46 in den Vorfluter, beispielsweise einen Bach. Dadurch daß die Unterkante 32 des Stauschildes 21 von der Schwelle 28 abhebt und das Überfall-Wasser 30 darunter druchfließt, wird verhindert, daß die sich im Bereich der Wasseroberfläche im Stauraum 35 sammelnden Schwebstoffe - die Schmutzfracht - mit in den Vorfluter gelangen und diesen entgegen den vorgesehenen Flüssigkeitsführungen verunreinigen; denn sie bleiben zumindest zunächst im Bereich der relativ ruhig stehenden Oberfläche des Stauwassers am Niveau N2 hinter dem Stauschild 22. Darin liegt ein großer Vorteil der Anordnungen mit Stauschilden, deren Unterkante sich von der Schwelle löst und den Spiegel des gestauten Wassers weiter oben begrenzt.

Diese im Aufbau und der Funktion einfache, jedoch sichere Anordnung bietet große Vorteile, weil die Höhenlage des Stauzieles bzw. Oberwasserspiegels nicht über ein im Oberwasser schwimmendes Schwimmer-Gewicht bestimmt wird, sondern allein von der Masse des Gegengewichts und den Abmessungen abhängt und somit das Stauziel relativ genau eingehalten wird und damit beträchtliche Kosten am Bauwerk eingespart werden können. In die Abmessungen gehen die aus den Strömungsverhältnissen zwischen Schwelle und Stauschild sich ergebenden Strömungskräfte ein.

Ein weiterer besonderer Vorteil der erfindungsgemäßen Ausbildung liegt darin, daß die Anordnung zugleich eine Rückstauklappe bildet.

Wie es in Fig. 6 und 7 veranschaulicht ist, kann im Überlaufraum 36 infolge Rückströmen von Wasser aus dem Vorfluter oder zu großem Anfall von Wasser ein Stau auftreten, der hier bis zum Niveau N3 dargestellt ist. In diesem Zustand hängt das Gegengewicht 22 zum Teil im Rückstauwasser, so daß eine Entlastung des Stauschildes 21 von Zugkräften auftritt und nunmehr ein Schließen des Stauschildes erfolgen kann, wobei dieses Schließen von den Wasserdruckkräften auf beiden Seiten des Stauschildes 21 und dem Differenzgewicht des schwimmenden Gegengewichtes 22 bestimmt wird. Somit ist ein von einem freihängenden Gewicht gesteuertes Stauschild mit günstigen Stau- und Abströmverhältnissen mit einer Rückstauklappe in besonders günstiger Weise kombiniert. Die im Querschnitt birnenförmige Ausgestaltung des Gegengewichtes 22 gemäß den Zeichnungen ermöglicht dabei, Differenzkräfte aus der Größe des Eintauchvolumens, welches sich mit stärker steigendem Wasserspiegel ändert, zu berücksichtigen, wie es bisher zumindest in dieser erfindungsgemäßen Zusammenwirkung nicht vorgeschlagen wurde.

Zusammengefaßt kann die Erfindung auch wie folgt beschrieben werden:
Zur Steuerung von Überfallmengen und Wasserspiegellagen in Wasseranlagen, insbesondere in Regenwasserrückhalte- und Regenwasserbehandlungsanlagen, Regenbecken und Kläranlagen wird das Regenüberlauf-Stauschild als Steuereinrichtung eingebaut.

Das Stauschild (21) ist mit einem Gegengewicht (22) mit hydraulischer Form (27) über Seilzüge (66, 65, 68) verbunden und zur seitlichen Führung mit auch als Seitenwangen bezeichneten Führungsstäben (55) und Rollenführungselementen (58) ausgerüstet.

Bei Überschreiten des vorgesehenen Wasserspiegelniveaus(N2) und damit Überschreiten der vom Gegengewicht (22) aufgebrachten Schließkraft öffnet das Stauschild (21) durch Zurückbewegen von der Schwelle (28) und das Überfall-Wasser (30) fließt zwischen Unterkante (32) des Stauschildes und Schwelle (28) hindurch und durch den Überlaufraum (36) zum Vorfluter. Das Stauschild (21) ist auch als Rückstausicherung gestaltet.

## Patentansprüche

1. Einrichtung zur Steuerung von Überfallmengen und Wasserspiegellagen in Wasseranlagen
- mit einem Stauraum (35)
- mit Zulauf und Ablauf,
- mit einer Überlaufschwelle (28)
- mit einem Stauschild (21),
- das Stauschild ist zur Vergrößerung der Stauhöhe ausgebildet;
- das Stauschild ist bei Erreichen eines vorgegebenen Wasserstandes in dem an ein Wasserbecken angeschlossenen Stauraum entsprechend dem Wasserdruck in Öffnungsstellung bewegbar und schließt bei fallendem Wasserspiegel;
- dem Stauschild ist zur Bestimmung der Schließkraft ein Gegengewicht (22) zugeordnet;
- die Öffnungsbewegung erfolgt in Richtung der Fließrichtung (31) des überlaufenden Wassers;
- das Stauschild ist dadurch als Rückstausicherung ausgebildet;
- das Stauschild nimmt in der Schließstellung (60) und in der ganz geöffneten Stellung eine im wesentlichen vertikale Stellung ein;
- das Gegengewicht (22) ist über einen Seilzug (25, 26.1 bis 26.3; 66, 65, 68) zur Aufbringung der Schließkraft mit dem Stauschild verbunden,
- dem Stauschild sind Seitenführungen bzw. Seitenwangen Zugeordnet;
- das als Schwimmer ausgebildete Gegengewicht (22) wird vom im Überlaufraum (36) aufgestauten Wasser angehoben bzw. mit fallendem Spiegel desselben abgesenkt;
- das Gegengewicht (22) hat im Querschnitt eine Profilform (27), bei der die hydraulischen Auftriebskräfte in Schwimmerstellung, die Höhe und Masse des Gegengewichts und die Größe seines Volumens entsprechend dem gewünschten Öffnungsverhalten an die Größe des Stauschildes (21) angepaßt sind.

2. Einrichtung nach Anspruch 1, **dadurch gekennzeichnet,** daß das Gegengewichts-Element (22) als Hohlkörper ausgebildet ist, der zur Bestimmung der Schließkraft und damit des Stauzieles bzw. des über der Überlaufkante (39) der Überlaufschwelle (28) liegenden Stauwasserspiegels (N2) mit Wasser (74) oder anderen Ballast-Stoffen füllbar ist.

3. Einrichtung nach einem der vorhergehenden Ansprüche, **dadurch gekennzeichnet,** daß das Überlaufwasser (30) zwischen der Überlaufschwelle (28) und der Unterkante (32) des Stauschildes (21) im Abstand unter dem Regenwasserspiegel (N2) in den zum Vorfluter geöffneten Abflußraum (36) gelangt.

4. Einrichtung nach einem der vorhergehenden Ansprüche, **dadurch gekennzeichnet,** daß der Stauschild (21) mit Horizontalführungen (55, 58; 23) ausgestattet ist.

5. Einrichtung nach einem der vorhergehenden Ansprüche, **dadurch gekennzeichnet,** daß am Rand des Stauschildes (21) auf der der Überlaufschwelle (28) zugewandten Seite desselben eine Dichtung (52) angebracht ist.

## Claims

1. Apparatus for controlling overflow quantities and water levels in hydraulic installations
- having an accumulation chamber (35)
- having an inlet and an outlet,
- having an overflow barrier (28)
- having a barrage plate (21),
- the barrage plate is provided for increasing the damming height;
- when a predetermined water level is reached in the accumulation chamber connected to a water basin, the barrage plate is movable into the open position in accordance with the water pressure and closes as the water level falls;
- to determine the closing force, a counterweight (22) is associated with the barrage plate;
- the opening movement takes place in the flow direction (31) of the overflowing water;
- the barrage plate is therefore formed as an anti-backflow device;
- the barrage plate adopts a substantially vertical position in the closed position (60) and in the fully open position;
- the counterweight (22) is connected to the barrage plate by tackle (25, 26.1 to 26.3; 66, 65, 68) for applying the closing force;
- lateral guides and sidewalls are associated with the barrage plate;
- the counterweight (22), formed as a float, is raised by the water impounded in the overflow chamber (36) and lowered as the water level drops;
- the counterweight (22) has a cross-sectional form (27) in which the hydraulic buoyancy forces in a float position, the height and mass of the counterweight and the volume thereof are adapted to the size of the barrage plate (21) in accordance with the desired opening behaviour.

2. Apparatus according to claim 1, characterised in that the counterweight element (22) is formed as a hollow body and can be filled with water (74) or other ballast materials to determine the closing force and thereby the damming height or the back-water level (N2) lying above the overflow edge (39) of the overflow barrier (28).

3. Apparatus according to one of the preceding claims, characterised in that the overflowing water (30) between the overflow barrier (28) and the lower edge (32) of the barrage plate (21) passes into the overflow chamber (36), opening into the receiving water, at a distance below the rainwater level (N2).

4. Apparatus according to one of the preceding claims, characterised in that the barrage plate (21) is provided with horizontal guides (55, 58; 23).

5. Apparatus according to one of the preceding claims, characterised in that a seal (52) is provided on the edge of the barrage plate (21) on the side thereof facing the overflow barrier (28).

## Revendications

1. Dispositif pour la commande des débits de trop-plein et de la position de la surface libre de l'eau dans des installations hydrauliques, comprenant
- une chambre de retenue (35),
- une arrivée et un départ,
- un déversoir de trop-plein (28)
- un tablier de retenue (21),
- le tablier de retenue est réalisé pour augmenter la hauteur de retenue ;
- le tablier de retenue peut se placer en position d'ouverture en réponse à la pression de l'eau lorsqu'on atteint un niveau d'eau prédéterminé dans la chambre de retenue raccordée à un bassin de rétention d'eau et il se ferme en cas de chute du niveau de l'eau ;
- un contrepoids (22) est associé au tablier de retenue pour la détermination de la force de fermeture ;
- le mouvement d'ouverture se produit parallèlement à la direction de l'écoulement (31) de l'eau qui se déverse en trop-plein ;
- le tablier de retenue constitue de cette façon une sécurité de reflux ;
- le tablier de retenue prend une position sensiblement verticale dans la position de fermeture (60) et dans la position entièrement ouverte ;
- le contrepoids (22) est relié au tablier de retenue par une transmission à câble (25, 26.1 à 26.3 ; 66, 65, 68) pour appliquer la force de fermeture,
- des guides latéraux ou joues latérales sont associés au tablier de retenue ;
- le contrepoids (22), réalisé sous la forme d'un flotteur, est soulevé par l'eau accumulée dans la chambre de trop-plein (36) ou s'abaisse lorsque le niveau de l'eau descend ;
- le contrepoids (22) a en section transversale une forme de profil (27) dans laquelle les forces de poussée hydraulique dans la position flotteur, la hauteur et la masse du contrepoids ainsi que la grandeur du volume sont adaptées à la dimension du tablier de retenue (21) d'une façon qui correspond au comportement d'ouverture souhaité.

2. Dispositif selon la revendication 1, caractérisé en ce que l'élément contrepoids (22) est constitué par un corps creux qui peut être rempli d'eau (74) ou d'autres matières de lest pour la détermination de la force de fermeture et, par conséquent, de la consigne de retenue ou de la hauteur (N2) de la surface libre de l'eau de retenue au-dessus du bord (39) de déversement du déversoir (28).

3. Dispositif selon une des revendications précédentes, caractérisé en ce que l'eau de trop-plein (30) parvient dans la chambre d'écoulement (36) ouverte sur l'éméissaire en passant entre le déversoir (28) et le bord inférieur (32) du tablier de retenue (21) à distance au-dessous de la surface libre (N2) des eaux pluviales.

4. Dispositif selon une des revendications précédentes, caractérisé en ce que le tablier de retenue (21) est équipé de guides horizontaux (55, 58 ; 23).

5. Dispositif selon une des revendications précédentes, caractérisé en ce qu'une garniture d'étanchéité (52) est agencée au bord du tablier de retenue (21) sur le côté qui est dirigé vers le déversoir (28).
